Europäisches Patentamt

European Patent Office

Office européen des brevets

(19)

(11) Veröffentlichungsnummer: **0 174 267**
**B1**

# EUROPÄISCHE PATENTSCHRIFT

(12)

(45) Veröffentlichungstag der Patentschrift:
**10.05.89**

(21) Anmeldenummer: **85730095.8**

(22) Anmeldetag: **18.07.85**

(51) Int. Cl.⁴: **H 02 K 9/19,** H 02 K 9/24

(54) **Elektrische Maschine mit Überwachung des Flüssigkeitskühlkreislaufes.**

(30) Priorität: **24.07.84 DE 3427758**

(43) Veröffentlichungstag der Anmeldung:
**12.03.86 Patentblatt 86/11**

(45) Bekanntmachung des Hinweises auf die Patenterteilung:
**10.05.89 Patentblatt 89/19**

(84) Benannte Vertragsstaaten:
**AT CH DE FR LI SE**

(56) Entgegenhaltungen:
**CH-A-625 343**
**DE-A-2 044 507**
**DE-A-2 929 627**
**FR-A-2 361 012**

(73) Patentinhaber: **Siemens Aktiengesellschaft Berlin und München, Wittelsbacherplatz 2, D-8000 München 2 (DE)**

(72) Erfinder: **Perner, Otto, Westfälische Strasse 34, D-1000 Berlin 31 (DE)**
Erfinder: **Krause, Ingo- Edgar, Bismarckstrasse 90, D-1000 Berlin 12 (DE)**
Erfinder: **Rössger, Gerhard, Tietjenstrasse 45, D-1000 Berlin 49 (DE)**

## Beschreibung

Die Erfindung bezieht sich auf eine elektrische Maschine, insbesondere einen Wasserkraftgenerator, mit einem geschlossenen Flüssigkeitskühlkreislauf, dessen flüssiges Kühlmittel durch eine Pumpe gefördert, über einen Kühler und eine Kühlmittelaufbereitung parallele Hauptzweige durchströmt, die in verschiedenen Maschinenteile, insbesondere Statorwicklung, Rotorwicklung, Statorblechpaket, Preßplatten, liegen, wobei jeder Hauptzweig sowohl mehrere gleichartige parallele Teilzweige, die zwischen einem Zuleitungsrohr und einem Ableitungsrohr verlaufen, als auch Meßwertaufnehmer zur Messung der Durchflußmenge des Kühlmittels enthält und die Meßwerte jedes Hauptzweiges unter sich in einer Auswerteschaltung in Beziehung zueinander gesetzt werden, die bei einer bestimmten Abweichung ein Warnsignal abgibt.

Bei dieser aus der FR-A-2 361 012 bekannten elektrischen Maschine enthalten alle von einer Hauptleitung gespeisten, parallel durchströmten Teilzweige einen Meßwertaufnehmer zur Überwachung des Kühlmitteldurchflusses. Die Meßwertaufnehmer sind dabei als Meßsonden ausgeführt, die von dem flüssigen Kühlmittel umströmt werden. Jede Meßsonde besteht aus einem Widerstandsthermometer, das mit einem mit konstanter elektrischer Leistung beaufschlagten Heizkörper in Wärmekontakt steht. Die Entwärmung der Meßsonde ist der Strömungsgeschwindigkeit des Kühlmittels direkt proportional, unterschiedliche Durchflußmengen in den Teilzweigen haben verschieden starke Erwärmungen der einzelnen Meßsonden und damit unterschiedliche Meßwerte der Widerstandsthermometer zur Folge. Die Widerstandsthermometer aller Meßsonden aller Teilzweige eines Hauptzweiges sind umschaltbar an einer Auswerteeinrichtung angeschlossen, die eine zyklische Abtastung der Meßwerte vornimmt und sie in Beziehung zueinander setzt.

Es werden somit die Durchflußmengen aller Teilzweige erfaßt und zur Überwachung der Kühlmittelströmung herangezogen. Das Überschreiten einer einstellbaren zulässigen Differenz zwischen zwei Meßwerten oder zwischen einem Meßwert und dem Mittelwert aller Meßwerte bedeutet eine Betriebsstörung und führt mit Hilfe der Auswerteschaltung zur Auslösung eines Warnsignals. Die bei dieser diskontinuierlicher Überwachung notwendige große Anzahl von Meßwertaufnehmern entsprechend der Anzahl der Teilzweige erhöht sowohl den Aufwand für die Auswertung der Meßwerte als auch die Gefahr von Störungen des Überwachungssystems.

Weiterhin ist aus den Brown-Boverie-Mitteilungen 1971, Seiten 18 - 24 eine elektrische Maschine bekannt, deren Flüssigkeitskühlkreislauf vier parallele Hauptzweige enthält mit jeweils mehreren gleichartigen parallelen Teilzweigen. Zur Betriebs-Überwachung wird die Temperatur direkt in jedem Teilzweig mit Thermoelementen gemessen. Die Meßstellen werden in Intervallen von einem mitrotierenden Magnetschrittschalter abgetastet und die Thermospannungen über Schleifringe einem kompensierten Schreiber zugeführt. Diese diskontinuierliche Überwachung ist aufwendig und nicht problemlos.

Der Erfindung liegt die Aufgabe zugrunde, eine zeitlich kontinuierliche, einfache und störungsarme Überwachung des Flüssigkeitskühlkreislaufes zu schaffen.

Die Aufgabe wird gemäß der Erfindung dadurch gelöst, daß bei einer elektrischen Maschine der eingangs beschriebenen Art das Zuleitungsrohr oder das Ableitungsrohr jedes Hauptzweiges in zwei Vohrrohre mündet, an deren Enden jeweils ungefähr die Hälfte aller parallelen Teilzweige eines Hauptzweiges angeschlossen sind und daß die beiden Vorrohre jedes Hauptzweiges jeweils wenigstens eine Meßblende aufweisen und der Differenzdruck zwischen den Meßblenden beider Vorrohre der Auswerteschaltung zugeführt ist.

Die Messung des Kühlmitteldurchflusses erfolgt somit nur in den beiden in dem Flüssigkeitskühlkreislauf pro Hauptzweig vorgesehenen Vorrohren. Dadurch wird die zur Überwachung des Flüssigkeitskühlkreislaufes erforderliche Anzahl von Meßwertaufnehmern vermindert und damit der Aufwand für die Auswertung ihrer Meßwerte und die Anfälligkeit für Störungen erheblich herabgesetzt. Trotz des einfachen Aufbaus mit Meßblenden nur in beiden Vorrohren, deren Differenzdruck der Auswerteschaltung ständig zugeführt ist, zeichnet sich diese Anordnung durch eine hohe Empfindlichkeit bei der Erfassung von Änderungen des Kühlmitteldurchflusses in den Vorrohren und durch eine hohe Langzeitstabilität aus. Durch die Verbindung der Meßblenden beider Vorrohre untereinander und mit der Auswerteeinrichtung ist die Erfassung der Durchflußmenge über den Differenzdruck zeitlich kontinuierlich. Wenn infolge einer Betriebsstörung eine bestimmte Differenz der Durchflußmengen eintritt, so wird von der Auswerteschaltung ein Warnsignal abgegeben.

Die Überwachung des Flüssigkeitskühlkreislaufs wird einfacher, wenn bei ungestörtem Betrieb die Durchflußmengen an den Meßstellen der beiden Vorrohre eines Hauptzweiges gleich sind. Sind die mit den beiden Vorrohren verbundenen parallelen Teilzweige ungleich aufgebaut, so daß die Durchflußmengen an den Meßstellen bei ungestörtem Betrieb voneinander abweichen würden, so empfiehlt es sich, in jedem Hauptzweig, parallel zu zumindest den mit einem Vorrohr verbundenen parallelen Teilzweigen, oder parallel zu der dortigen Meßstelle, eine weitere Leitung (Bypass) mit einem einstellbaren Ventil, vorzusehen. Durch Regelung des Ventils und somit der Durchflußmenge durch diese weitere Leitung kann für den normalen Betriebsfall eine gleiche Durchflußmenge an den Meßstellen beider Vorrohre eingestellt werden. Die Auswerteschaltung zeigt dann bei ungestörtem Berieb Null an. Bei gestörtem Betrieb ist die Differenz der Durchflußmengen an den Meßstellen von Null verschieden und die Auswerteschaltung kann ein Warnsignal abgeben.

Besonders einfach und robust läßt sich die Durchflußmenge des flüssigen Kühlmittels in den beiden Vorrohren mit Meßblenden messen. Sind die Meßblenden über einen Differenzdruckaufnehmer miteinander verbunden, so wird eine Änderung der Durchflußmenge in den Vorrohren direkt erfaßt.

Der Differenzdruck kann aber auch einen Ausgleichsfluß hervorrufen, der mit einem Durchflußmengenmesser erfaßt wird. Dann wird die Empfindlichkeit der Überwachung gegenüber der Empfindlichkeit bei Verwendung eines Differenzdruckaufnehmers erhöht.

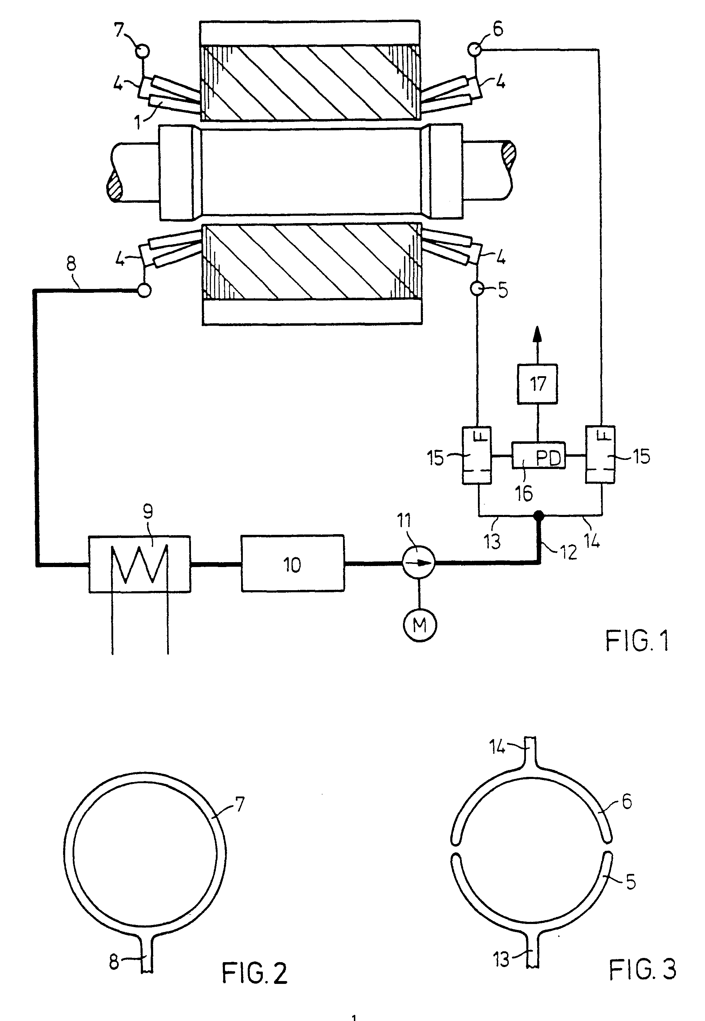

Im folgenden sei die Erfindung noch anhand der in den Figuren 1 bis 5 der Zeichnung dargestellten Ausführungsbeispiele näher erläutert.

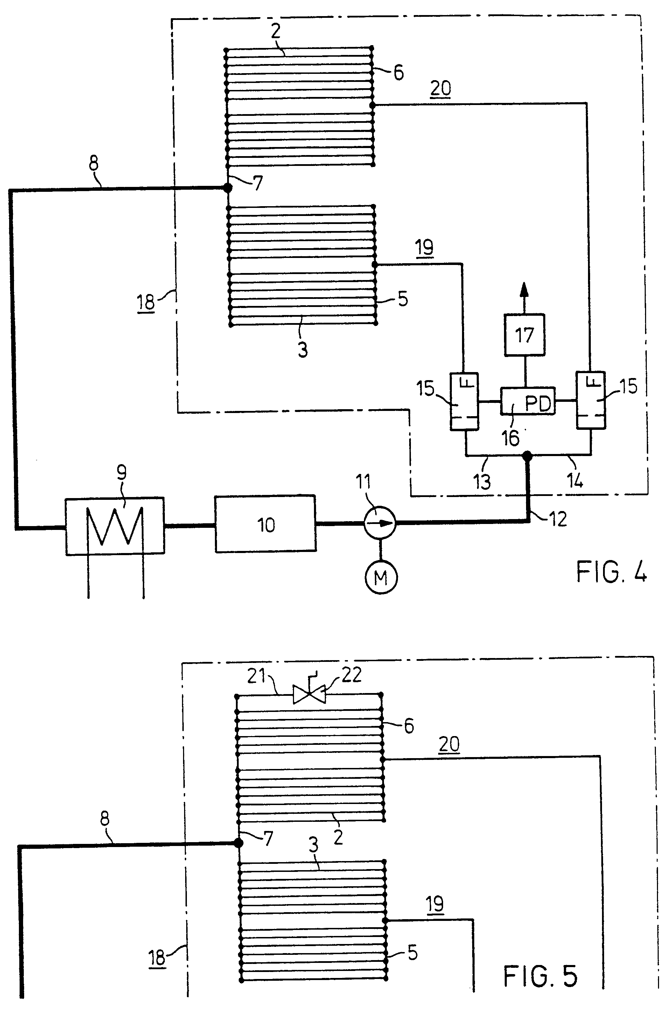

Figur 1 zeigt in stark vereinfachter schematischer Darstellung einen Längsschnitt durch eine elektrische Maschine mit dem Prinzipschaltbild für den Flüssigkeitskühlkreislauf. Ansichten der Sammelrohre an den Stirnseiten der elektrischen Maschine sind in den Figuren 2 und 3 dargestellt. Figur 4 zeigt das Schema des Flüssigkeitskühlkreislaufes. Figur 5 zeigt einen gegenüber Figur 4 veränderten Teil des Schemas des Flüssigkeitskreislaufes.

Die Ständerwicklung 1 einer elektrischen Maschine, z. B. eines Wasserkraftgenerators, ist mit Wasser flüssigkeitsgekühlt. In den Wicklungsstäben 2, 3 liegen Hohlleiter zur Führung des flüssigen Kühlmittels. Die Wicklungsstäbe 2, 3 sind auf der einen Stirnseite der elektrischen Maschine über isolierende Teflonschläuche 4 an zwei halbkreisförmige Sammelrohre 5, 6 angeschlossen, ebenso wie auf der anderen Stirnseite an einem ringförmigen Sammelrohr 7. Das ringförmige Sammelrohr 7 ist an das Ableitungsrohr 8 angeschlossen. Vom Ableitungsrohr 8 wird das flüssige Kühlmittel durch den Kühler 9, die Kühlmittelaufbereitung 10 und die Pumpe 11 zum Zuleitungsrohr 12 gepumpt.

Das Zuleitungsrohr 12 mündet in zwei Vorrohre 13, 14. Beide Vorrohre 13, 14 weisen eine Meßblende 15 auf, die miteinander über einen Differenzdruckaufnehmer 16 verbunden sind. Die vom Differenzdruckaufnehmer 16 erfaßten Werte werden auf eine Auswertschaltung 17 gegeben, die bei gestörtem Betrieb ein Warnsignal abgibt. An den Enden der Vorrohre 13, 14 sind die halbkreisförmigen Sammelrohre 5, 6 angeschlossen, welche die Wicklungsstäbe 3, 2 speisen.

Da nur die Ständerwicklung 1 flüssigkeitsgekühlt ist und der Rotor mit Luft gekühlt wird, enthält der Flüssigkeitskühlkreislauf nur einen Hauptzweig 18 (Figur 4). Das flüssige Kühlmittel fließt, von der Pumpe 11 gefördert, durch den Hauptzweig 18. Dort nimmt es in den Wicklungsstäben 2, 3 deren Verlustwärme auf und gibt sie im Kühler 9 ab. Die Kühlmittelaufbereitung 10 kann auch parallel zu Kühler 9 und Pumpe 11 liegen. Durch Aufteilung des Zuleitungsrohres 12 in die beiden Vorrohre 13, 14 besteht der Hauptzweig 18 aus zwei annähernd identischen Zweigen 19, 20. Diese wiederum enthalten mehrere parallele Teilzweige, die durch die Wicklungsstäbe 3, 2 gebildet werden. Der Kühlmitteldurchfluß in den Wicklungsstäben 2, 3 und damit die Entwärmung des Generators wird überwacht, in dem die Abweichung der Durchflußmengen in zwei annähernd identischen Zweigen 19, 20 zueinander festgestellt wird.

Die Durchflußmengen werden in einfacher Weise über robuste Meßblenden 15 erfaßt, an denen bei Durchströmung ein Staudruck entsteht. Die Differenz dieser beiden Staudrücke wird direkt in dem Differenzdruckaufnehmer 16 festgestellt. Sind die Durchflußmengen in den Vorrohren 13, 14 gleich, so verschwindet der Differenzdruck bei gleichartigen Meßblenden 15. Wird ein Wicklungsstab 2 oder 3 nicht mehr ausreichend durchströmt, ändert sich auch die Durchflußmenge in den Vorrohren 14 oder 13 und es entsteht ein Differenzdruck zwischen den Meßblenden 15. Dieser Differenzdruck löst oberhalb eines Schwellwertes mittels der Auswerteschaltung 17 ein Warnsignal aus. Da in den beiden Vorrohren 13, 14 die Durchflußmengen auch bei ungestörtem Betrieb voneinander abweichen können, sind die Meßblenden 15 oder die Auswerteschaltung 17 kalibrierbar.

Ein anderes Ausführungsbeispiel ist in Figur 5 dargestellt. Hier besteht die Möglichkeit bei ungestörtem Betrieb, trotz unterschiedlicher paralleler Teilzweige gleiche Durchflußmengen durch die Meßblenden 15 zu erhalten.

An die Vorrohre 13, 14 sind unterschiedlich viele Wicklungsstäbe 3, 2 angeschlossen. Parallel zu den Wicklungsstäben 2 ist eine weitere Leitung 21 mit regelbarem Ventil 22 vorgesehen. Durch Regelung des Ventils 22 wird für den normalen Betriebsfall die Druckdifferenz zwischen den beiden Meßblenden 15 auf Null abgeglichen. Bei gestörtem Betrieb entsteht ein Differenzdruck, der mittels der Auswerteschaltung 17 ein Warnsignal auslöst.

Um gleichmäßige Strömungsverhältnisse in den Vorrohren 13, 14 zu erzielen und damit eine genaue Messung der Durchflußmengen zu ermöglichen, sind die Vorrohre ausreichend lang zu wählen. Insbesondere ist es anzustreben, daß der Abstand der Meßblenden 15 von der Einmündung des Zuleitungsrohres 12 in die Vorrohre 13, 14 in etwa dem 20-fachen Durchmesser eines Vorrohres 13, 14 gleich ist.

Ebenso verhält es sich mit dem Abstand der Meßblenden 15 zu den halbkreisförmigen Sammelrohren 5, 6. Dies ergibt sich aus den bei Wasserkraftgeneratoren üblichen Abmessungen.

## Patentansprüche

1. Elektrische Maschine, insbesondere Wasserkraftgenerator, mit einem geschlossenen Flüssigkeitskühlkreislauf, dessen flüssiges Kühlmittel durch eine Pumpe (11) gefördert, über einen Kühler (9) und eine Kühlmittelaufbereitung (10) parallele Hauptzweige (18) durchströmt, die in verschiedenen Maschinenteilen, insbesondere Statorwicklung (1), Rotorwicklung, Statorblechpaket, Preßplatten, liegen, wobei jeder Hauptzweig (18) sowohl mehrere gleichartige parallele Teilzweige (2, 3), die zwischen einem Zuleitungsrohr (12) und einem Ableitungsrohr (8) verlaufen, als auch Meßwertaufnehmer (15) zur Messung der Durchflußmenge des Kühlmittels enthält und die Meßwerte jedes Hauptzweiges (18) unter sich in einer Auswerteschaltung (17) in Beziehung zueinander gesetzt werden, die bei einer bestimmten Abweichung ein Warnsignal abgibt, dadurch gekennzeichnet, daß das Zuleitungsrohr (12) oder das Ableitungsrohr (8) jedes Hauptzweiges (18) in zwei Vorrohre (13, 14) mündet, an deren Enden jeweils ungefähr die Hälfte aller parallelen Teilzweige (2, 3) eines Hauptzweiges (18) angeschlossen sind und daß die beiden Vorrohre (13, 14) jedes Hauptzweiges (18) jeweils wenigstens eine Meßblende (15) aufweisen und der Differenzdruck zwischen den Meßblenden (15) beider Vorrohre (13, 14) der Auswerteschaltung (17) zugeführt ist.

2. Elektrische Maschine nach Anspruch 1, dadurch gekennzeichnet, daß in jedem Hauptzweig (18), parallel zu zumindest den mit einem Vorrohr (14) verbundenen parallelen Teilzweigen (2), oder parallel zu der dortigen Meßstelle (15), eine weitere Leitung (21) (Bypass) mit einem einstellbaren Ventil (22) vorgesehen ist.

3. Elektrische Maschine nach Anspruch 1 oder 2, dadurch gekennzeichnet, daß die Meßblenden (15) beider Vorrohre (13, 14) über einen Differenzdruckaufnehmer (16) miteinander verbunden sind.

4. Elektrische Maschine nach Anspruch 1 oder 2, dadurch gekennzeichnet, daß die Meßblenden (15) beider Vorrohre (13, 14) über einen Durchflußmengenmesser miteinander verbunden sind.

## Claims

1. Electric machine, more particularly a hydroelectric generator, having a closed liquid cooling circuit, the liquid coolant of which, conveyed by means of a pump (11), flows by way of a cooler (9) and a coolant treatment system (10) through parallel main branches (18), which lie in various machine parts, more particularly stator winding (1), rotor winding, stator laminated core, press plates, each main branch (18) containing not only several similar parallel partial branches (2, 3), which extend between a supply pipe (12) and a discharge pipe (8), but also measuring sensors (15) for measuring the through-flow of the coolant and the measured values of each main branch (18) being set one among the other in relation to each other in an evaluation circuit (17) which emits a warning signal in the event of a certain deviation, characterised in that the supply pipe (12) or the discharge pipe (8) of each main branch (18) runs into two preceding pipes (13, 14), to the ends of which there are connected, in each case, approximately half of all the parallel partial branches (2, 3) of a main branch (18) and in that the two preceding pipes (13, 14) of each main branch (18) have, in each case, at least one orifice (15) and the differential pressure between the orifices (15) of the two preceding pipes (13, 14) is fed to the evaluation circuit (17).

2. Electric machine according to claim 1, characterised in that a further line (21) (bypass) with an adjustable valve (22) is provided in each main branch (18) parallel to at least the parallel partial branches (2), which are connected with a preceding pipe (14), or parallel to the measuring point (15) there.

3. Electric machine according to claim 1 or 2, characterised in that the orifices (15) of both preceding pipes (13, 14) are connected with each other by way of a differential pressure sensor (16).

4. Electric machine according to claim 1 or 2, characterised in that the orifices (15) of both preceding pipes (13, 14) are connected with each other by way of a through-flow measuring device.

## Revendications

1. Machine électrique, en particulier génératrice hydro-électrique avec un circuit de réfrigération à liquide fermé, dont le milieu réfrigérant, mis en circulation par une pompe (11), passe, par l'intermédiaire d'un radiateur (9) et d'un dispositif de préparation du milieu réfrigérant (10), dans des branches principales et parallèles (18), qui se situent dans différents éléments de la machine, en particulier dans l'enroulement statorique (1), dans l'enroulement rotorique, dans le paquet de tôles statoriques, dans les plateaux de serrage, chaque branche principale (18) comportant aussi bien plusieurs branches partielles identiques et parallèles (2, 3) qui s'étendent entre un tuyau d'alimentation (12) et un tuyau d'évacuation (8), que des capteurs de valeurs de mesure (15) pour la mesure du débit du milieu réfrigérant, alors que les valeurs de mesure de chaque branche principale (18) sont rapportées les unes par rapport aux autres dans un circuit d'évaluation (17) qui émet un signal d'alerte pour un écart déterminé, caractérisée par le fait que le tuyau d'admission (12) ou le tuyau d'évacuation (8) de chaque branche principale (18) débouche dans deux tuyaux amont (13, 14) aux extrémités desquels sont respectivement reliées environ la moitié de toutes les branches partielles et parallèles (2, 3) d'une branche principale (18), et que les deux tuyaux amont (13, 14) de chaque branche principale (18) comportent respectivement au moins un orifice de mesure (15), alors que la pression différentielle entre les orifices de mesure (15) des deux tuyaux amont (13, 14), est appliquée au circuit d'évaluation (17).

2. Machine électrique selon la revendication 1, caractérisée par le fait que dans chaque branche principale (18), et parallèlement à au moins les branches partielles et parallèles (2) qui sont reliées à un tuyau amont (14), où parallèlement aux points de mesures (15) qui y sont agencés, est prévue une conduite supplémentaire (21) (Bypass) avec une soupape réglable (22).

3. Machine électrique selon la revendication 1 ou 2, caractérisée par le fait que les orifices de mesure (15) des deux tuyaux amont (13, 14) sont reliés entre eux par l'intermédiaire d'un capteur (16) de la pression différentielle.

4. Machine électrique selon la revendication 1 ou 2, caractérisée par le fait que les orifices de mesure (15) des deux tuyaux amont (13, 14) sont reliés entre eux par l'intermédiaire d'un débitmètre.

FIG. 1

FIG. 2

FIG. 3

FIG. 4

FIG. 5